# EUROPEAN PATENT SPECIFICATION

(11) **EP 3 808 596 B1**
(45) Date of publication and mention of the grant of the patent: **07.06.2023**
(21) Application number: 20168579.9
(22) Date of filing: 07.04.2020
(51) Int. Cl.: B60N 2/30, B60N 2/22

(54) **PASSENGER SEAT FOR VEHICLES**
FAHRGASTSITZ FÜR FAHRZEUGE
SIÈGE PASSAGER POUR VÉHICULES

(30) Priority: 16.10.2019 TR 201915975; 05.11.2019 TR 201917127
(43) Date of publication of application: 21.04.2021
(73) Proprietor: BRUSA Koltuk ve Ic Trim Teknolojileri Sanayi ve Tiaret A.S., 16159 Nilüfer/Bursa (TR)
(72) Inventor: Tuna, Zafer Teoman, 16159 Nilüfer Bursa (TR)
(74) Representative: Habermann, Hruschka & Schnabel

(56) References cited:
- WO-A1-01/49518
- WO-A1-03/066370
- CN-A- 105 905 003
- DE-C1- 19 741 370
- JP-A- H07 172 226

## Description

The present invention relates to a passenger seat for vehicles, such as buses, minibuses, trains, airplanes, ships and other public transport vehicles. In particular the present invention relates to a passenger seat comprising an additional seat structure for infants in order to provide a safer travel and more comfort for passengers travelling with infants in public transport vehicles.

Passenger seats of public transport vehicles usually are constructed to provide a certain comfort, in particular when aimed for long-distance travels, but they in principle do not comprise means for adapting to needs when travelling with children.

Currently, passengers traveling with children have their child either sitting on the lap during travel, keeping them embraced, or they have to buy an additional seat place in order to travel side by side with the children. Families travelling with their children sitting on laps substantially suffer in terms of safety and comfort.

First of all, persons carrying a child on the lap during a long-lasting journey, experience various physical discomforts. Children, at the same time, usually become to be restless due to the uncomfortable position and thus make the travel quite cumbersome.

Second, beside discomfort, this kind of travel also brings some risks regarding safety. Shaking during travel, rapid acceleration or deceleration and skids in turns put the passenger as well as the child in danger. Using the seatbelt with a child on the lap is also not quite possible. The passenger has to be very careful during the travel. E.g. in case the passenger falls asleep with a child on the lap during long travels, unwanted accidents may be the consequence.

Passenger seats are often made to be safe and comfortable for adults. Children sitting or lying on such seats which are not suited for their physical stature, thus cause physical health issues. Even further, due to their size ordinary seatbelts provided in such passenger seats are not designed for and suited for children and therefore present a great safety risk. It is highly possible for children to fall off the seats during accidents or sudden braking, even when using such seatbelts.

For example, passenger seats for vehicles according to the preamble of claim 1 are known inter alia from WO 03/066370 A1, DE 197 41 370 C1 and JP H07/172226 A, respectively. Further configurations of passenger seats in this respect are known from WO 01/49518 A1 and CN 105 905 003 A.

Based on this, it is the objective of the present invention to provide a passenger seat, in particular for public transport vehicles, which provides a high safety and better comfort for passengers travelling with children, which passenger seat shall be easy to use.

Such objective is solved by a passenger seat having the features of claim 1.

Accordingly, the present invention provides a passenger seat for vehicles which comprises a seat frame structure supporting a seating surface, a backrest being arranged at the seat in a tilting manner and an actuation mechanism for activating the tilting of the backrest, wherein the passenger seat comprises in addition a seat structure which is adapted for receiving infants and which is arranged at the backrest opposite to the seating surface, in which the infant seat structure is having an infant seating surface being arranged at the backrest in a tilting manner.

With respect to public transport vehicles comprising such passenger seats according to the invention, passengers may simply purchase two seats in a row, so that they can use the passenger seat in front of them for their children in that they fold out the infant seating surface being provided in the backrest of the front seat. By that the child will be seated directly in front of the person and thus be able to travel safely and comfortably.

As known for example from WO03/066370 A1, the actuation mechanism may be configured to activate the infant seat structure for tilting. In other words, in that the passenger handles the actuation mechanism for tilting the backrest of the front passenger seat forward, the infant seat structure either gets released to be manually foldable out or it gets folded out by means of the actuation mechanism directly by suitable transmission means and actuators.

According to the invention the infant seat structure is configured to activate the actuation mechanism upon tilting of the infant seating surface. In other words, in that the passenger folds out the infant seating surface, at the same time the backrest is released for manually pushing it forward or it gets actively tilted forward by suitable transmission means and actuators.

In order to keep the infant seating surface open and closed and to avoid rattling during vehicle travel, at least one piston mechanism, preferably laterally thereto, may be arranged at the infant seating surface or its support, which piston mechanism may also be configured to support the folding-in and -out motion.

Preferably, the seat frame structure comprises a rotary mechanism being adapted to be activated by the actuation mechanism. The rotary mechanism may be coupled to a piston mechanism or similar configured to apply a force for tilting the backrest forward upon activation.

Preferably, the rotary mechanism may comprise a locking mechanism being configured to be released upon manual operation by the passenger.

Most preferably, the seat frame structure may comprise a tilting limiter. The limiter is configured to limit the reclining angle of the backrest and additionally keeps the backrest secure from opening and closing or changing of position during rattling and shaking during the vehicle travel. Unintentional change of the position of the front passenger seat is thus prevented, so that a maximum safety is offered.

Preferably, the chassis of the backrest may comprise a recess for receiving the infant seating surface in the folded-in position. Even further, such recess, which in the folded-out condition of the infant seating surface forms the backrest for the infant, is ergonomically shaped with respect to infants in order to offer the highest comfort. It may even comprise correspondingly formed cushioning.

Most preferably, the chassis of the backrest may comprise a seat belt mechanism configured and dimensioned for the infant to be used when the infant seating surface is folded out thereby allowing safe travelling for the child.

The invention further provides a vehicle, in particular for mass transport of people, which comprises at least one passenger seat with features of the afore-mentioned embodiment.

The passenger seat according to the invention removes the above-mentioned disadvantages and enables travelling with infants with the highest safety and comfort in public transport vehicles.

Further advantages and features shall become apparent from the following description of the embodiments as shown in connection with the accompanied drawings, in which
Fig. 1a a side view of a passenger seat according to an embodiment of the invention;
Fig. 1b a perspective view of said passenger seat;
Fig. 2 a seat frame structure of said passenger seat in perspective view;
Fig. 3a a side view of the seat frame structure of said passenger seat showing an infant seat structure in the stand-by mode;
Fig. 3b a side view of the seat frame structure of said passenger seat showing an infant seat structure in the service mode;
Fig. 4a a side view of a passenger seat not according to the invention;
Fig. 4b a perspective view of said passenger seat;
Fig. 5a a side view of a seat frame structure of said passenger seat showing in infant seat structure in the stand-by mode;
Fig. 5b a side view of the seat frame structure of said passenger seat showing an infant seat structure in the service mode and in the stand-by mode with tilted backrest;
Fig. 6a a perspective view of the seat frame structure of said passenger seat; and
Fig. 6b an explosive view of the seat frame structure of said passenger seat.

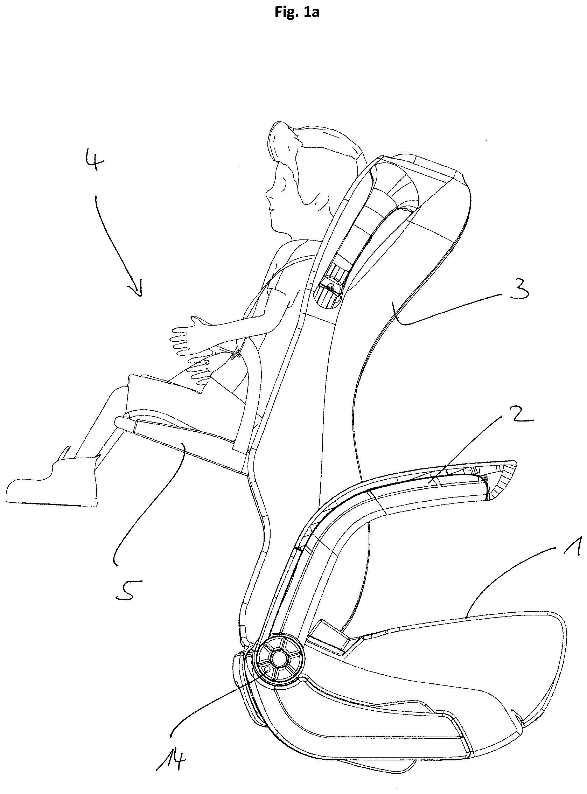

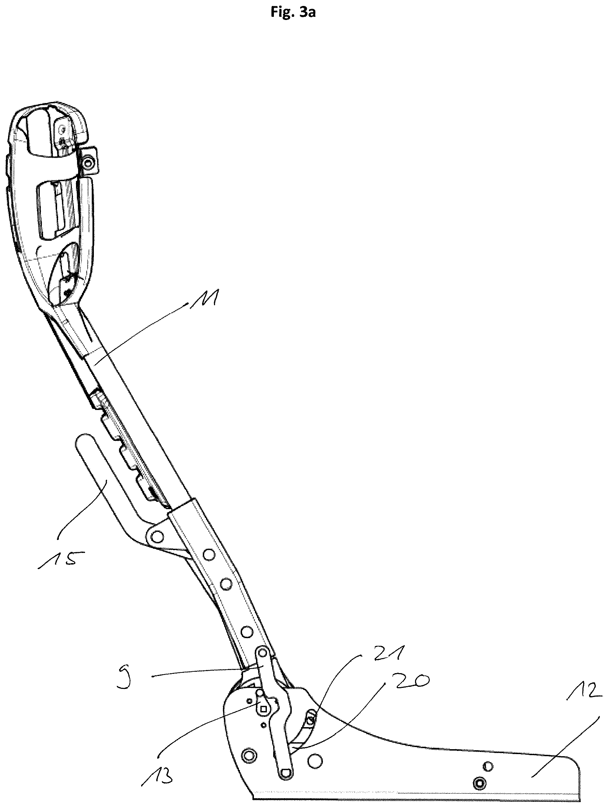

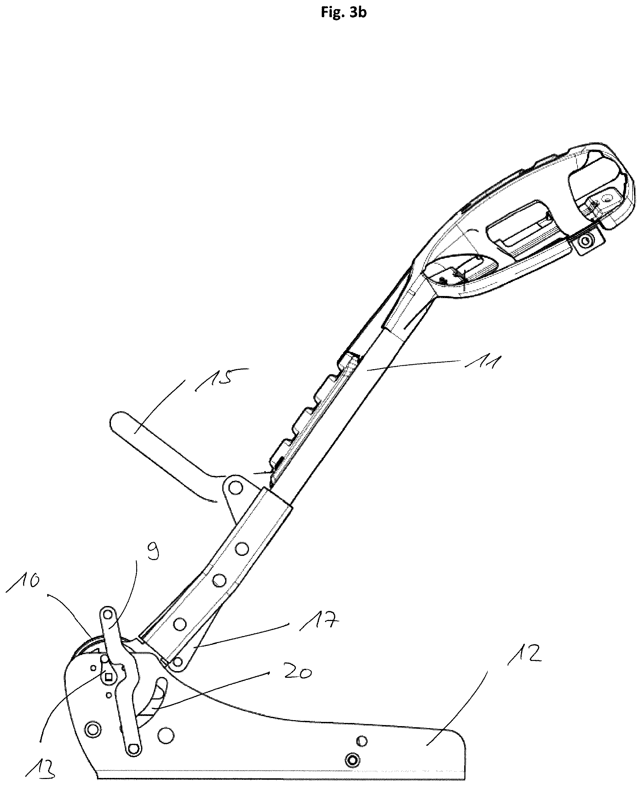

In Figs. 1a to 3b an embodiment of a passenger seat according to the invention is shown, which passenger seat is aimed for public transport vehicles of any kind, such as e.g. buses.

In Fig. 1a the passenger seat is shown from the side. Usually it comprises a seating surface 1, an armrest 2 and a backrest 3. The backrest 3 is arranged with respect to the seating surface 1 in a swivelling or tilting manner.

According to the invention, the backrest 3 comprises opposite to the seating surface 1, i.e. opposite to the usual driving direction, an infant seat structure 4 for receiving an infant or child, as shown in Fig. 1a.

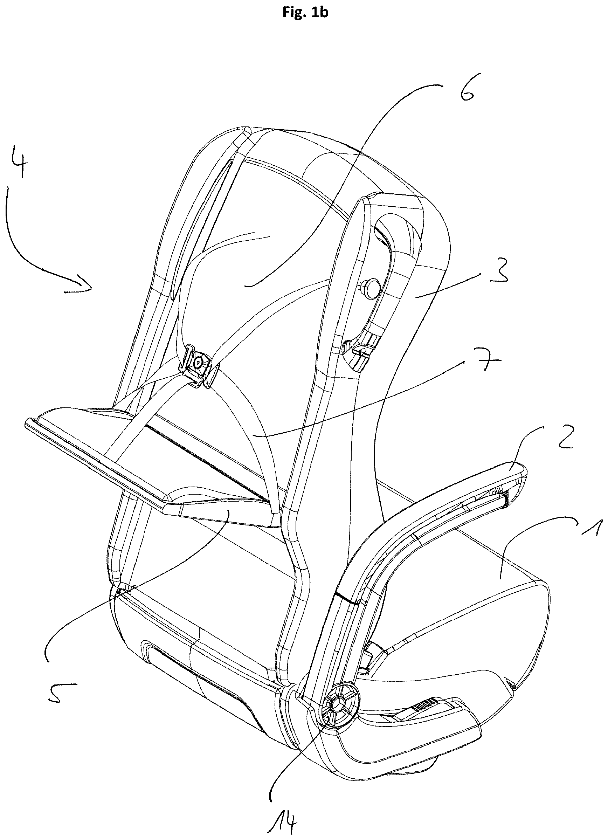

As can be seen in Fig. 1b, the infant seat structure 4 comprises an infant seating surface 5, which is arranged at the backrest 3 in a swivelling or titling manner, as to be described. The backrest 3 further comprises a recess 6, which receives the infant seating surface 5 in the folded-in state. In the folded-out state, said recess 6 basically forms the backrest for the child. An infant seat belt 7 is arranged between the recess 6 and the infant seating surface 5 such that the infant seat belt 7 will be contained between the recess 6 and the infant seating surface 5 in the folded-in state and thus stored.

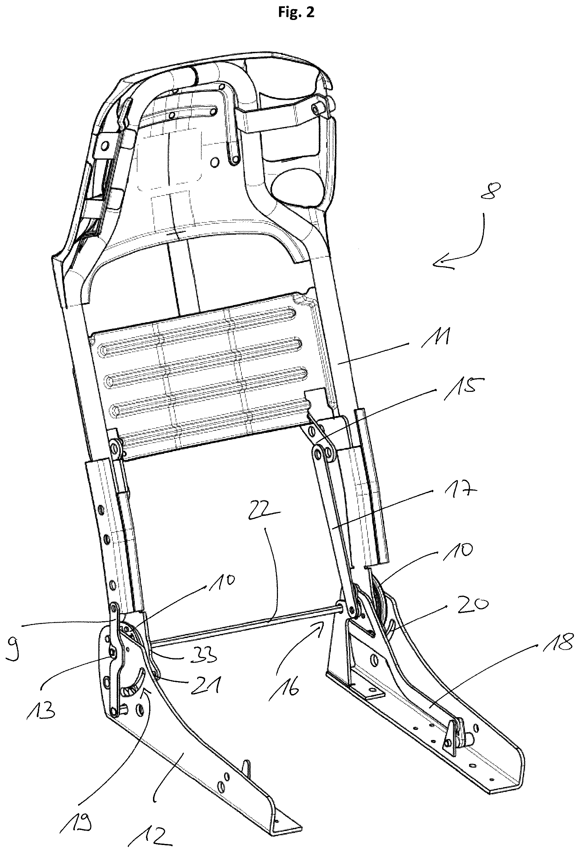

Figs. 2 to 3b show a seat frame structure 8 of the passenger seat of this embodiment, i.e. without its chassis.

A release handle or lever 9 is arranged on the side of a rotary mechanism 10, by which an entire frame structure 11 of the backrest 3 is rotatably mounted on a base strut 12 of the seat frame structure 8. The release lever 9 is cooperating with a locking latch 13 and is connected to a corresponding knob or similar arranged laterally outside of the chassis, such as a rotating knob 14 as shown in Figs. 1a and b.

A support strut 15, which carries the infant seating surface 5, is rotatably arranged on the backrest frame structure 11. The support strut 15 is linked to a gear mechanism or lever linkage 16, in the present case consisting of two rods 17 and 18 being arranged with respect to the seat frame structure 8 and the rotary mechanism 10 or joint in such a way that upon swivelling of the support strut 15 into the service position, i.e. backward when seen in the driving direction, a first rod 17 linked thereto will be rotated forward and thereby said first rod 17, which is connected to a second rod 18 being arranged in the base strut 12, pushes the second rod 18 forward. Since the second rod 18 is also directly linked to the rotary mechanism 10, which basically is a rotary joint between the backrest frame structure 11 and the base strut 12, the backrest 3 is pushed forward thereby.

In other words, once the release lever 9 upon handling by the passenger unlocks the backrest 3 in that the locking latch 13 is disengaged from the release lever 9, the backrest 3 will be simply moved forward automatically upon tilting the infant seating surface 5 into the folded-out service state by the passenger. With one single movement both the backrest 3 tilts forward and the infant seating surface 5 opens.

The support strut 15 and the lever linkage 16 basically form an actuation mechanism for tilting the backrest 3. Such actuation mechanism may in addition comprise a hydraulic piston means for supporting the tilting movement.

In order to fix the backrest 3 in a certain angular position, which at the same time defines the inclination of the infant seating surface 5, the passenger simply may handle the release lever 9 to bring it back into engagement with the locking latch 13, which is directly connected to the rotary mechanism 10.

Further, in order to avoid that the backrest 3 can be moved for- or backward too far, a tilting limiter 19 is provided in the base strut 12 to both sides, which consists of a groove 20 formed in a segment of a circle which groove 20 slidingly receives a cam 21 of the rotary mechanism 10 and guides the cam 21 upon tilting of the backrest 3. The cam 21 is integral with a plate 33 of the backrest frame structure 11, as can be seen in Fig. 2.

To allow synchronous transmission of the rotating movement upon tilting of the backrest 3 when activated by the lever linkage 16, the rotary mechanisms 10 to both sides are connected by a transmission shaft 22 being rotatably supported in the base struts 12. The transmission shaft 22 further is fixed to the locking latch 13, so that upon engagement of the release lever 9 both rotary mechanisms 10 are locked simultaneously.

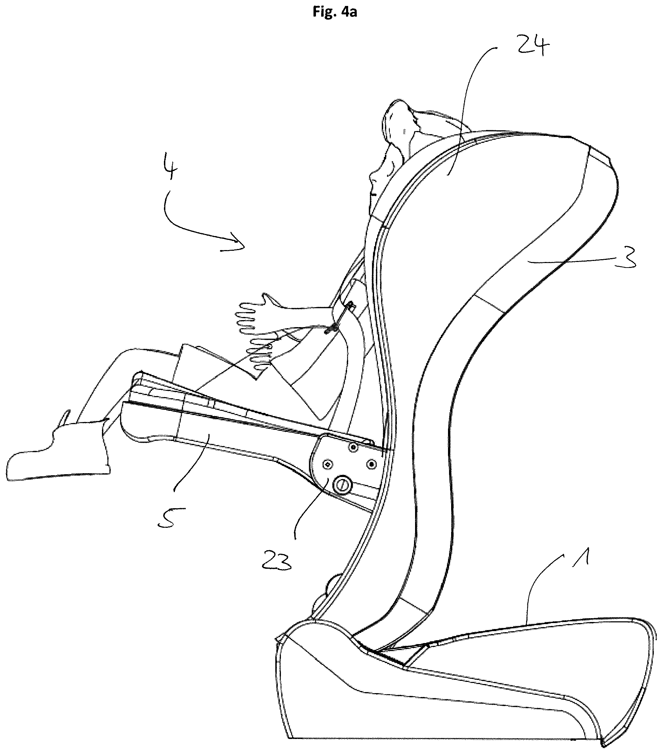

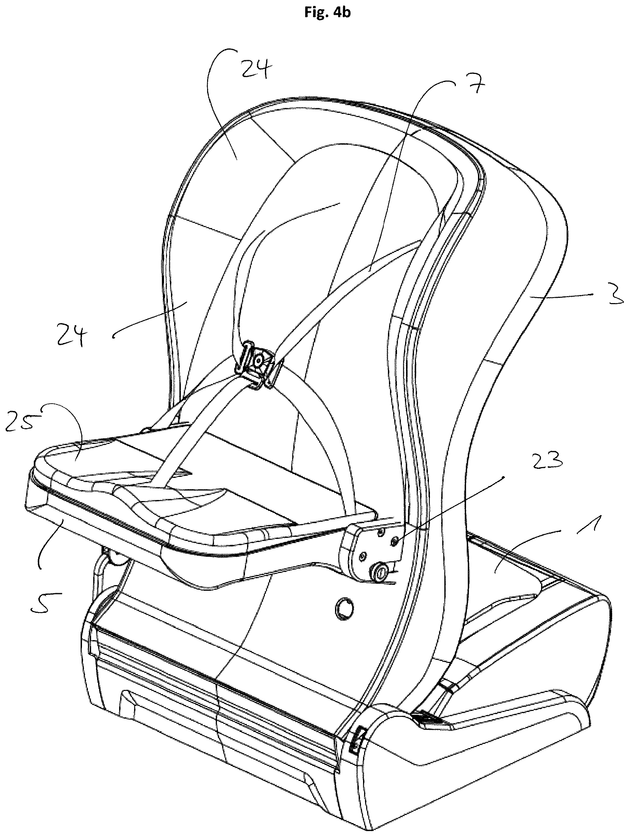

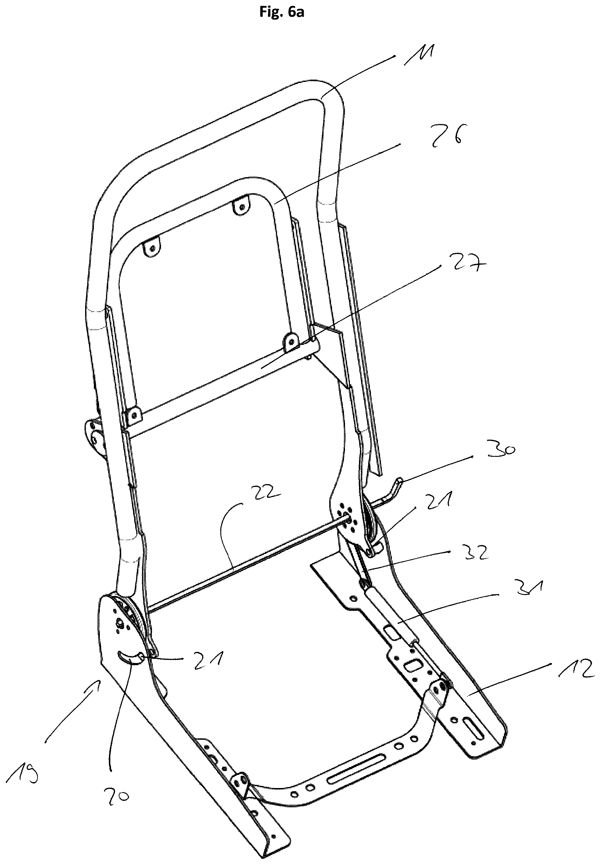

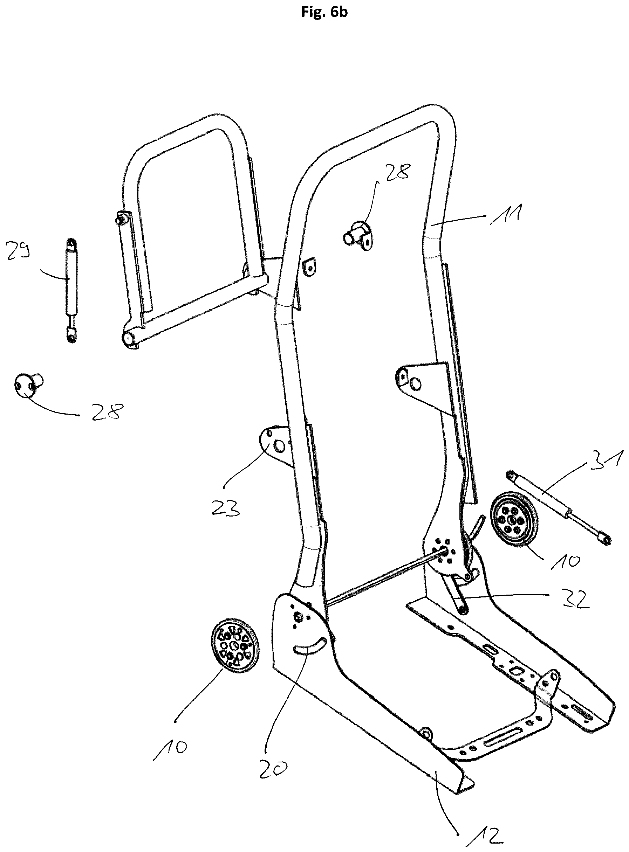

In Figs. 4a to 6b a passenger seat not according to the invention is shown. Same components are denoted by same reference numerals.

The passenger seat comprises a seating surface 1 and a backrest 3 being arranged rotatably with respect to the seating surface 1. As with the embodiment of the invention, the passenger seat comprises an infant seat structure 4 at the rear of the backrest when seen in the driving direction.

The infant seat structure 4 comprises a recess 6 in the backrest 3 and an infant seating surface 5 being arranged at the backrest 3 in a swivelling manner at lateral mounting plates 23 protruding from the backrest 3 at both sides.

The recess 6 and the chassis of the passenger seat are configured such that lateral headrests and support flanks 24 are provided for supporting the head and the torso of the child during driving around turns with certain speeds. In addition, the infant seating surface 5 may comprise ergonomic troughs 25 for the child's legs.

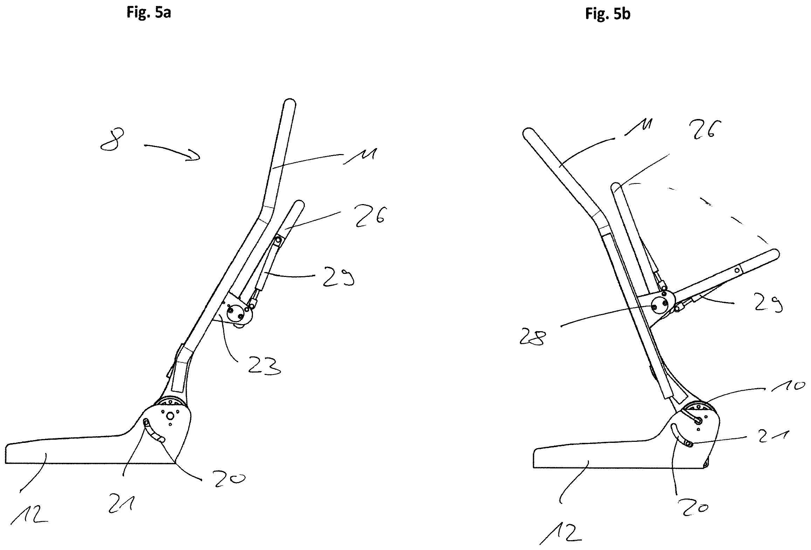

Figs. 5a to 6b show the passenger seat without the chassis, i.e. the seat frame structure 8 consisting of backrest frame structure 11 and the base struts 12.

The mounting plates 23 are fixed to the backrest frame structure 11, e.g. by welding. A frame 26 of the infant seat structure 4 for supporting the infant seating surface 5 comprises an axle 27, which is simply rotatably supported in both mounting plates 23 by means of pins 28 thereby forming rotary joints.

A hydraulic piston mechanism 29 is arranged between the frame 26 and one of the mounting plates 23 such that the manually opening and closing of the frame 26, and thus of the infant seating surface 5, is supported on the one hand. On the other, the piston 29 is configured to keep the infant seating surface 5 in the opened or closed position and in addition to dampen the entire mechanism so as to avoid rattling noises which may be generated when the vehicle is moving.

Between the base struts 12 and the backrest frame 11 rotary mechanisms 10 are provided, which serve as a joint between the base strut 12 and the backrest frame structure 11 such that the latter is rotatably supported at the base struts 12, and which are connected by a common transmission shaft 22. The transmission shaft 22 comprises a handle 30, which can be accessed by the passenger from the outside of the chassis to release the backrest 3, for which the rotary mechanisms 10 may comprise suitable locking means (not shown).

Once released, the backrest 3 will be moved forward or backward by the help of forces then applied by a piston mechanism 31, which is arranged between one of the base struts 12 and a lever 32 being connected to the rotary mechanism 10 or the backrest frame structure 11.

As in the embodiment of the invention, a tilting limiter 19 is provided at both base struts 12 consisting of a groove 20 for guiding a cam 21 within a restricted angular extension only.

The actuation mechanism for tilting the backrest 3 is made of the piston mechanism 31, the lever 32 and the release or activation handle 30. A passenger, who likes to use the infant seat structure 4 can simple actuate the handle 30 for adjusting the position of the backrest 3 and then fold-out the infant seating surface 5.

## Claims

1. Passenger seat for vehicles comprising a seat frame structure (8) supporting a seating surface (1), a backrest (3) being arranged at the seat in a tilting manner and an actuation mechanism (9, 15, 16) for activating the tilting of the backrest (3),
and a seat structure (4) adapted for receiving infants and being arranged at the backrest (3) opposite to the seating surface (1), in which the infant seat structure (4) comprises an infant seating surface (5) being arranged at the backrest (3) in a tilting manner,
**characterized in that**
the infant seat structure (4) is configured to activate the actuation mechanism (9,15,16) upon tilting of the infant seating surface (5).

2. Passenger seat according to claim 1, in which a piston mechanism (29) is arranged at the infant seating surface (5) for keeping it open and closed.

3. Passenger seat according to claim 1 or 2, in which the seat frame structure (8) comprises a rotary mechanism (10) being adapted to be activated by the actuation mechanism (9, 15, 16).

4. Passenger seat according to claim 4, in which the rotary mechanism (10) is coupled to a piston mechanism (31) configured to apply a force for tilting the backrest (3) forward upon activation.

5. Passenger seat according to claim 3 or 4, in which the rotary mechanism (10) comprises a locking mechanism (13) being configured to be released upon manual operation.

6. Passenger seat according to one of claims 3 to 5, in which the seat frame structure (8) comprises a tilting limiter (19).

7. Passenger seat according to one of claims 1 to 6, in which the chassis of the backrest (3) comprises a recess (6) for receiving the infant seating surface (5) in the folded-in position.

8. Passenger seat according to claim 7, in which the recess (6) is ergonomically shaped with respect to infants.

9. Passenger seat according to one of claims 1 to 8, in which the chassis of the backrest (6) comprises a seat belt mechanism (7) for the infant.

10. Vehicle, in particular for mass transport of people, comprising a passenger seat according to one of claims 1 to 9.

## Patentansprüche

1. Fahrgastsitz für Fahrzeuge mit einer eine Sitzfläche (1) tragenden Sitzrahmenstruktur (8), einer am Sitz kippbar angeordneten Rückenlehne (3) und einem Betätigungsmechanismus (9, 15, 16) zur Aktivierung des Kippens der Rückenlehne (3), und mit einer zur Aufnahme von Kleinkindern geeigneten Sitzstruktur (4), die an der Rückenlehne (3) gegenüber der Sitzfläche (1) angeordnet ist, wobei die Sitzstruktur (4) für Kleinkinder eine an der Rückenlehne (3) kippbar angeordnete Kleinkindersitzfläche (5) aufweist,
**dadurch gekennzeichnet, dass**
die Sitzstruktur (4) für Kleinkinder konfiguriert ist, um den Betätigungsmechanismus (9, 15, 16) beim Kippen der Kleinkindersitzfläche (5) zu aktivieren.

2. Fahrgastsitz nach Anspruch 1, bei dem ein Kolbenmechanismus (29) an der Kleinkindersitzfläche (5) angeordnet ist, um diese offen und geschlossen zu halten.

3. Fahrgastsitz nach Anspruch 1 oder 2, bei dem die Sitzrahmenstruktur (8) einen Drehmechanismus (10) aufweist, der durch den Betätigungsmechanismus (9, 15, 16) aktiviert werden kann.

4. Fahrgastsitz nach Anspruch 4, bei dem der Drehmechanismus (10) mit einem Kolbenmechanismus (31) gekoppelt ist, der so konfiguriert ist, dass er bei Aktivierung eine Kraft zum Vorwärtskippen der Rückenlehne (3) aufbringt.

5. Fahrgastsitz nach Anspruch 3 oder 4, bei dem der Drehmechanismus (10) einen Verriegelungsmechanismus (13) aufweist, der so konfiguriert ist, dass er bei manueller Betätigung gelöst wird.

6. Fahrgastsitz nach einem der Ansprüche 3 bis 5, bei dem die Sitzrahmenstruktur (8) einen Kippbegrenzer (19) aufweist.

7. Passagiersitz nach einem der Ansprüche 1 bis 6, bei dem das Chassis der Rückenlehne (3) eine Aussparung (6) zur Aufnahme der Kleinkindersitzfläche (5) in der eingeklappten Position aufweist.

8. Fahrgastsitz nach Anspruch 7, bei dem die Aussparung (6) ergonomisch für Kleinkinder geformt ist.

9. Fahrgastsitz nach einem der Ansprüche 1 bis 8, bei dem das Chassis der Rückenlehne (6) einen Sicherheitsgurtmechanismus (7) für das Kleinkind aufweist.

10. Fahrzeug, insbesondere zur Massenbeförderung von Personen, mit einem Fahrgastsitz nach einem der Ansprüche 1 bis 9.

## Revendications

1. Siège passager pour véhicules comprenant une structure de châssis de siège (8) supportant une surface d'assise (1), un dossier (3) agencé de façon inclinable au niveau du siège et un mécanisme d'actionnement (9, 15, 16) pour activer l'inclinaison du dossier (3) et une structure de siège (4) adaptée pour recevoir des enfants et agencée au niveau du dossier (3) opposé à la surface d'assise (1), dans lequel la structure de siège pour enfant (4) comprend une surface d'assise pour enfant (5) agencée de façon inclinable au niveau du dossier (3),
**caractérisé en ce que**
la structure de siège pour enfant (4) est configurée pour activer le mécanisme d'actionnement (9, 15, 16) lors de l'inclinaison de la surface d'assise pour enfant (5).

2. Siège passager selon la revendication 1, dans lequel un mécanisme à piston (1) est agencé au niveau de la surface d'assise pour enfant (5) pour la maintenir ouverte et fermée.

3. Siège passager selon la revendication 1 ou 2, dans lequel la structure de châssis de siège (8) comprend un mécanisme rotatif (10) adapté pour être activé par le mécanisme d'actionnement (9, 15, 16).

4. Siège passager selon la revendication 3, dans lequel le mécanisme rotatif (10) est couplé à un mécanisme à piston (31) configuré pour appliquer une force pour incliner le dossier (3) vers l'avant lorsqu'il est activé.

5. Siège passager selon la revendication 3 ou 4, dans lequel le mécanisme rotatif (10) comprend un mécanisme de verrouillage (13) configuré pour être libéré en mode de fonctionnement manuel.

6. Siège passager selon une des revendications 3 à 5, dans lequel la structure de châssis de siège (8) comprend un limiteur d'inclinaison (19).

7. Siège passager selon une des revendications 1 à 6, dans lequel le châssis du dossier (3) comprend un logement (6) pour recevoir la surface d'assise pour enfant (5) en position pliée.

8. Siège passager selon la revendication 7, dans lequel le logement (6) a une forme ergonomique par rapport aux enfants.

9. Siège passager selon une des revendications 1 à 8, dans lequel le châssis du dossier (3) comprend un mécanisme de ceinture de siège (7) pour l'enfant.

10. Véhicule, en particulier pour le transport en commun des personnes, comprenant un siège passager selon une des revendications 1 à 9.
